# EUROPÄISCHE PATENTSCHRIFT

(11) **EP 1 048 105 B1**
(45) Veröffentlichungstag und Bekanntmachung des Hinweises auf die Patenterteilung: **10.11.2004**
(21) Anmeldenummer: 99936425.0
(22) Anmeldetag: 08.06.1999
(51) Int. Cl.: H02K 1/18

(54) **ELEKTRISCHE MASCHINE MIT EINEM UM EINEN STATOR ROTIERENDEN ROTOR**
ELECTRIC MOTOR WITH A ROTOR ROTATING AROUND A STATOR
MOTEUR ELECTRIQUE COMPORTANT UN ROTOR TOURNANT AUTOUR D'UN STATOR

(30) Priorität: 21.08.1998 DE 19838038
(43) Veröffentlichungstag der Anmeldung: 02.11.2000
(73) Patentinhaber: ROBERT BOSCH GMBH, 70442 Stuttgart (DE)
(72) Erfinder: RUPP, Bernhard, D-75056 Sulzfeld (DE); KNOEPFEL, Gerd, D-77815 Buehl (DE)
(86) Internationale Anmeldenummer: PCT/DE1999/001665
(87) Internationale Veröffentlichungsnummer: WO 2000/011776

(56) Entgegenhaltungen:
- FR-A- 789 788
- US-A- 5 027 026

## Beschreibung

### Stand der Technik

Die Erfindung geht aus von einer elektrischen Maschine, insbesondere Elektromotor, mit einem um einen Stator rotierenden Rotor gemäß der Gattung des Patentanspruchs 1.

Durch die Druckschriften US 4,337,491 A, US 5,220,227 A, EP 0 236 467 B1, EP 0 433 479 A1 und DE 41 22 529 A1 sind notorisch bekannt elektrische Maschinen mit je einem Stator, je einem um den Stator rotierenden Rotor, mit je einer zentrisch zum Stator drehbar gelagerten Rotorwelle, mit Rotorwellenlagermitteln, mit je einer quer zur Rotorwelle und dabei neben dem Stator ausgerichteten Basisplatte und mit einem von der Basisplatte abstehenden Tragmittel zum Tragen des Stators und des jeweils wenigstens einen Rotorwellenlagermittels. Das Tragmittel ist jeweils nach Art eines von der Basisplatte abstehenden rohrartigen Elementes ausgebildet, auf das der jeweilige Stator aufgesteckt ist und in die die jeweiligen Rotorwellenlagermittel eingebaut sind. Je nach dem, ob die Basisplatte gegossen oder aus Blech gepreßt ist, kann das jeweilige rohrartige Tragmittel einstückig mit der Basisplatte gegossen oder aber in Form eines relativ dünnwandigen Rohres an die jeweilige Basisplatte angeflanscht und dabei mittels Schrauben gesichert oder aber in eine in der Basisplatte vorhandene Aufnahmebohrung eingepreßt sein. Erkennbar müssen die rohrartigen Tragmittel sowohl außen als auch innen präzise hergestellt sein zum rüttelsicheren Tragen der Statoren und Aufnehmen der Rotorwellenlagermittel. Dabei sind die Statoren aus Blechstanzschnitten geschichtet und haben innen eine Öffnung, die dem rohrartigen Tragmittel angepaßt ist. Um eine solche Öffnung wirken die Blechstanzschnitte als feststehende Naben, von denen radial nach außen Statorpolzähne ausgehen. Beispielsweise kann jeder Statorpolzahn eine Erregerwicklung tragen, oder es können gemäß der EP 0 433 479 A1 und auch der DE 41 22 529 A1 halb so viele Erregerspulen als Statorpolzähne vorgesehen sein, so daß, wie dies aus der EP 0 433 479 A1 deutlich hervorgeht, zwischen zwei jeweils Erregerspulen tragenden Polzähnen ein nicht bewickelter Polzahn vorhanden sein kann. Die Rotorwellenlagermittel bestehen wahlweise aus Paaren von Kugellagern, Paaren von außen zylindrischen Gleitlagerbuchsen oder aber Paaren von außen kalottenartig geformten Gleitlagerbuchsen oder aus einer einzigen, lang ausgebildeten rohrartigen Lagerbüchse. Die Rotoren enthalten permanentmagnetisierte Bauteile in im wesentlichen topfähnlichen Bauteilträgern Solche Bauteilträger werden auch als Poltopf bezeichnet.

Aus US 5 027 026 ist obenfalls ein Elektromotor bekannt mit einem Stator und um den Stator rotierenden Rotor.

### Vorteile der Erfindung

Die erfindungsgemäße elektrische Maschine mit einem um einen Stator rotierenden Rotor und den kennzeichnenden Merkmalen des Anspruchs 1 hat den Vorteil, daß auf einfache Art und Weise eine Schwingungsdämpfung erzielt wird, da die Hälfte der Statorpolzähne an der Basisplatte befestigt ist und dadurch diese Statorpolzähne schwingungsgedämpft sind und ein zentrales Tragrohr, das gemäß dem Stand der Technik von der Basisplatte absteht, überflüssig ist. Die schwingungsgedämpften Statorpolzähne bewirken weniger Geräuschabstrahlung als freistehende Statorpolzähne des Standes der Technik.

Durch die in den Unteransprüchen aufgeführten Maßnahmen sind vorteilhafte Weiterbildungen und Verbesserungen der im Anspruch 1 angegebenen elektrischen Maschine möglich.

Die kennzeichnenden Merkmale des Patentanspruches 2 ergeben eine preisgünstig aus Blech herstellbare Basisplatte mit Tragmitteln.

Die kennzeichnenden Merkmale des Patentanspruches 3 ergeben ein zweckmäßiges Ausführungsbeispiel insbesondere für die Verwendung einer Basisplatte aus Blech.

Die kennzeichnenden Merkmale des Patentanspruchs 4 und die kennzeichnenden Merkmale des Patentanspruches 5 geben konkrete auswählbare Lösungsmittel an.

Die kennzeichnenden Merkmale des Anspruches 6 bewirken den Vorteil, daß Magnetfluß durch die Statorpolzähne keine Wirbelströme ausgehend von Statorpolzähnen durch die Basisplatte und zurück zu Statorpolzähnen entstehen läßt. Die Vermeidung solcher Wirbelströme vermeidet unnützen Verbrauch von elektrischer Energie.

Die kennzeichnenden Merkmale des Anspruches 7 ergeben eine preisgünstige Konstruktion zur Lagerung der Ankerwelle insbesondere dann, wenn die elektrische Maschine ein sogenannter Kleinmotor ist. Ein weiterer Vorteil, wenn das Rohr aus Lagermetall gesintert ist, besteht darin, daß ohne sonst übliche Hilfsmittel wie Filzeinlagen ein relativ großer Vorrat aus Schmiermittel in die elektrische Maschine einbaubar ist.

Die kennzeichnenden Merkmale des Patentanspruches 8 ergeben den Vorteil, daß anläßlich des Anbauens des Stators an die Basisplatte eine achsgenaue Ausrichtung schnell zustande kommt, so daß danach lediglich noch die Drehausrichtung des Stators relativ zur Basisplatte vorzunehmen ist.

### Zeichnung

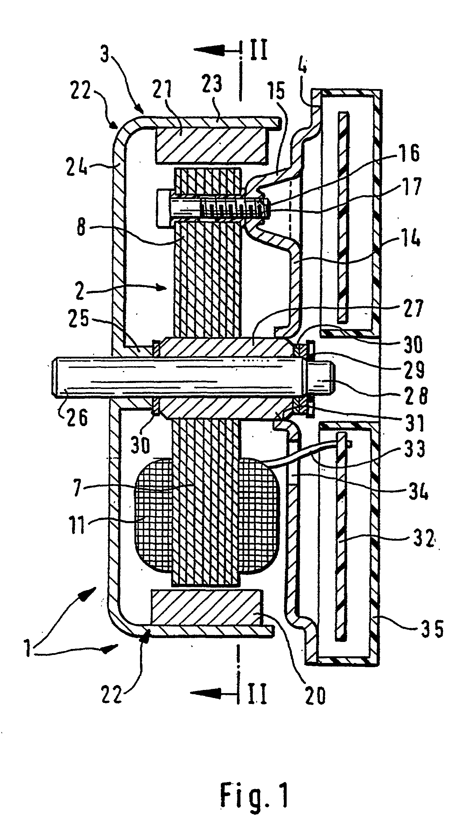

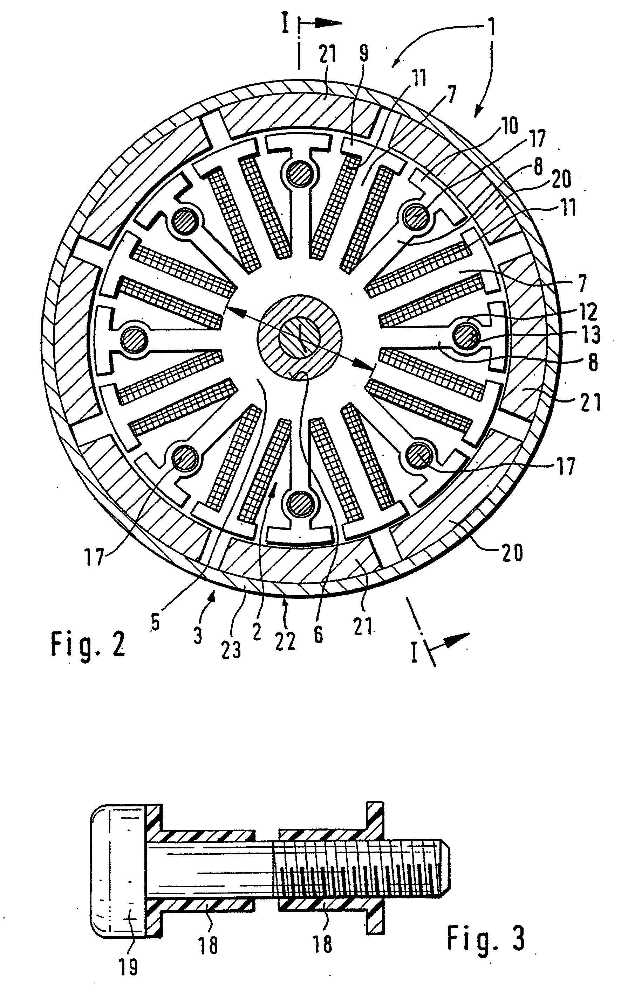

Die erfindungsgemäße elektrische Maschine ist anhand der Zeichnung schematisiert dargestellt und nachfolgend näher beschrieben. Es zeigen Figur 1 einen Längsschnitt durch die erfindungsgemäße elektrische Maschine, Figur 2 einen Querschnitt durch die erfindungsgemäße Maschine gemäß der Figur 1 und Figur 3 einen vergrößerten Ausschnitt aus der Figur 1.

### Beschreibung des Ausführungsbeispiels

Die elektrische Maschine 1 gemäß den Figuren 1 und 2, die beispielsweise als ein Elektromotor betreibbar ist, hat einen Stator 2, einen Rotor 3 und eine Basisplatte 4.

Wie dies aus der Figur 2 ersichtlich ist, hat der Stator 2 einen nach Art einer Nabe ausgebildeten Mittelteil 5 mit einer zentralen Öffnung 6 und von dieser Nabe 5 im Wechsel abstehende erste Statorpolzähne 7 und zweite Statorpolzähne 8. Beispielsweise können die ersten Statorpolzähne Statorpolschuhe 9 und die zweiten Statorpolzähne 8 weitere Statorpolschuhe 10 aufweisen.

Um die ersten Statorpolzähne 7 erstrecken sich Erregerspulen 11.

Die zweiten Statorpolzähne 8 weisen Verbreiterungen 12 nach Art von Befestigungsaugen auf und in Ausrichtung zu diesen Verbreiterungen 12 Durchgangslöcher 13. Wie bereits in der Beschreibungseinleitung erwähnt, ist der Stator aus Blechstanzschnitten geschichtet, so daß die Löcher 13 in technisch günstiger Weise ebenfalls beim Stanzen herstellbar sind.

Die in der Figur 1 im Schnitt dargestellte Basisplatte 4 hat einen plattenartigen Teil 14, von dem ausgehend in Richtung zum Stator 2 hier in Form von Warzen 15 ausgebildete Tragmittel von dem Stator 2 ausgehen. Im Längsschnitt gemäß der Figur 1 ist lediglich eine solche Warze 15 dargestellt. Weil aber in der Figur 2 acht zweite Statorpolzähne 8 dargestellt sind, muß man sich in der Figur 1 noch weitere Warzen 15 hinzudenken hinter der dargestellten Schnittebene. Im Ausführungsbeispiel hat die Warze 15 ein Gewindeloch 16 zur Aufnahme einer Schraube 17, die zuvor durch ein Loch 13 des an die Warze 15 angelegten Stators 2 gesteckt wurde. Wie aus der Figur 2 ersichtlich ist, sind im vorliegenden Beispiel acht solcher Schrauben 17 vorgesehen. Um die zweiten Statorpolzähne 8 elektrisch von den Warzen 5 und damit dem plattenartigen Teil 14 der aus Blech gepreßten Basisplatte 4 zu isolieren, sind zwischen die Schrauben 17 und die zweiten Statorpolzähne 8 Bundbuchsen 18 aus isolierendem Werkstoff eingefügt.

Diese Bundbuchsen 18 sind in der Figur 3 vergrößert dargestellt. Aus der Figur 3 ist ohne weiteres ableitbar, daß die zweiten Statorpolzähne 8 sowohl zur Schraube 17, als auch zu ihrem Schraubenkopf 19, als auch zur Warze 15 isoliert sind. Die isolierenden Bundbuchsen 18 verhindern Stromflußwege von einem Statorpolzahn durch die Basisplatte und zurück zu einem anderen Statorpolzahn und unterdrücken dieserart ein Entstehen von Kurzschlußströmen und Wirbelströmen, die im Motorbetrieb zu Verlust von elektrischer Energie führen würden.

Anstelle der hier aus Festigkeitsgründen aus Metall hergestellten Schrauben können natürlich alternativ auch andere Verbindungsmittel verwendet werden wie aus Metall hergestellte Niete, die wegen ihres Bekanntheitsgrades nicht gezeichnet sind. Bei Verwendung von Metall als Nietwerkstoff werden natürlich dann auch wieder Isoliermittel identisch oder ähnlich den Bundbuchsen 18 eingesetzt.

Der Rotor 3 besteht aus Permanentmagneten 20 und 21 und einem Poltopf 22, in dem die Permanentmagnete 20 und 21 befestigt, beispielsweise eingeklebt sind. Der Poltopf 22 ist zu diesem Zweck im Bereich der Permanentmagnete 20 und 21 nach Art eines zylindrischen Rohres 23 ausgebildet und weist quer dazu eine Wand 24 auf, die zu einer Nabe 25 führt. Die Nabe 25 ist gleichachsig zum zylindrischen Rohr 23 ausgerichtet und nimmt eine Rotorwelle 26 auf. Die Rotorwelle 26 erstreckt sich durch den Stator 2 und ist drehbar gelagert mittels Rotorwellenlagermitteln 27, die hier in Form einer relativ langen Gleitlagerbuchse ausgebildet sind und dieserart ein Integralbauteil bilden anstelle von im Stand der Technik notorisch vorkommenden Paaren aus Lagerbuchsen, denen ein Tragkörper zugeordnet ist. Beispielsweise besteht das Integralbauteil 27 aus gesintertem Lagerwerkstoff und ist mit Schmierstoff getränkt. Zwischen diesen als Integralbauteil ausgebildeten Rotorwellenlagermitteln 27 und der Nabe 25 einerseits und einem an einem Rotorwellenende 28 angeordneten Axialsicherungsring 29 andererseits sind vorzugsweise Gleitscheiben 30 eingebaut.

Die in Form eines Integralbauteils ausgebildeten Rotorwellenlagermittel 27 sind festsitzend eingebaut in die Öffnung 6 des Stators 2. Weil der Stator 2, wie dies bereits beschrieben wurde, seinerseits bereits an den Warzen 15 der Basisplatte 4 befestigt ist, sind der Stator 2 und die Warzen 15 das Tragmittel für die Rotorwellenlagermittel 27. Der Stator 2 und die Rotorwellenlagermittel 27 können zusammengefügt werden vor dem Befestigen des Stators 2 an der Basisplatte 4. Damit die Ausrichtung der Löcher 13 des Stators 2 zu den Warzen 15 bequemer möglich ist, weist die Basisplatte 4 zentral im plattenartigen Teil 14 eine Zentrieröffnung 31 auf, in die ein bei dem Rotorwellenende 28 befindlicher Längenabschnitt der Rotorwellenlagermittel 27 einsteckbar sind.

Der Basisplatte 4 ist eine Leiterplatte 32 zugeordnet, die stark vereinfacht dargestellt ist und nicht dargestellte passive und aktive elektrische Elemente wie Widerstände und Transistoren trägt und über mehr als einen Anschlußdraht 33 mit den Erregerspulen 11 verbunden ist. Zur Durchführung des Anschlußdrahtes 33 durch die Basisplatte 4 ist in deren plattenartigem Teil 14 mindestens eine Öffnung 34 angeordnet. Zum Schutz der nicht dargestellten elektrischen Komponenten ist eine die Leiterplatte 32 überdeckende Abdeckhaube 35 auf die Basisplatte 4 aufgesetzt.

## Patentansprüche

1. Elektrische Maschine, insbesondere Elektromotor,
mit einem Stator,
der einen eine Nabe bildenden Mittelteil mit einer zentralen Öffnung
und davon radial auswärts abstehende erste Statorpolzähne und zweite Statorpolzähne
und die ersten Statorpolzähne umgebende Erregerspulen aufweist,
mit einem Rotor,
der mittels einer zentrisch zum Stator ausgerichteten Rotorwelle gelagert ist
und um den Stator umläuft,
mit einer Basisplatte
und mit Rotorwellenlagermitteln die die Rotorwelle drehbar aufnehmen,
**dadurch gekennzeichnet,**
**daß** dem Stator (2) Tragmittel zugeordnet sind,
die von Projektionen eines jeden zweiten Statorpolzahnes (6) auf die Basisplatte ausgehen
und mit dem jeweiligen zweiten Statorpolzahn (6) verbunden sind,
und **daß** die Nabe (25) des Stators (2) die Rotorwellenlagermittel (27) trägt.

2. Elektrische Maschine nach Anspruch 1, **dadurch gekennzeichnet, daß** die Basisplatte (4) aus Blech geformt ist und daß die Tragmittel (15) als von der Basisplatte (4, 14) abstehende Warzen (15) ausgebildet sind, an denen die zweiten Statorpolzähne (8) befestigt sind.

3. Elektrische Maschine nach Anspruch 2, **dadurch gekennzeichnet, daß** zur Verbindung mit den Warzen (15) die zweiten Statorpolzähne (8) achsparallele Löcher (13) und die Warzen (15) deckungsgleich ausgerichtete Löcher (16) aufweisen, durch die hindurch Verbindungsmittel (18, 19) angeordnet sind.

4. Elektrische Maschine nach Anspruch 3, **dadurch gekennzeichnet, daß** die Löcher (16) in den Warzen (15) als Gewindelöcher und die Verbindungsmittel als aus Metall hergestellte Schrauben (17) ausgebildet sind.

5. Elektrische Maschine nach Anspruch 3, **dadurch gekennzeichnet, daß** die Verbindungsmittel als aus Metall hergestellte Niete ausgebildet sind.

6. Elektrische Maschine nach Anspruch 4 oder 5, **dadurch gekennzeichnet, daß** elektrische Isolatoren (18) eingebaut sind zwischen den Stator (2) und die Basisplatte (4) einerseits und andererseits.zwischen den Stator (2) und die Verbindungsmittel (17).

7. Elektrische Maschine nach Anspruch 1, **dadurch gekennzeichnet, daß** die Rotorwellenlagermittel (27) als ein rohrartiges Bauteil aus Lagermetall ausgebildet sind und daß dieses Bauteil festsitzend in der Öffnung (6) des Stators (2) angeordnet ist.

8. Elektrische Maschine nach Anspruch 7, **dadurch gekennzeichnet, daß** die Basisplatte (4) eine den Rotorwellenlagermitteln (27) zugeordnete Zentrieröffnung (31) aufweist und die Rotorwellenlagermittel (27) in die Zentrieröffnung (31) eintauchen.

## Claims

1. Electrical machine, in particular an electric motor,
having a stator,
which has a centre part which forms a hub and has a central opening,
and has first stator pole teeth, which project radially outwards from it, and second stator pole teeth
and has field coils which surround the first stator pole teeth,
having a rotor,
which is borne by means of a rotor shaft that is aligned centrically with respect to the stator
and revolves around the stator,
having a base plate,
and having rotor shaft bearing means which hold the rotor shaft such that it can rotate,
**characterized**
**in that** the stator (2) has associated supporting means,
which originate from projections on every alternate stator pole tooth (6) onto the base plate
and are connected to the respective second stator pole tooth (6),
and **in that** the hub (25) of the stator (2) is fitted with the rotor shaft bearing means (27).

2. Electrical machine according to Claim 1, **characterized in that** the base plate (4) is formed from sheet metal, and **in that** the supporting means (15) are in the form of studs (15) which project from the base plate (4, 14) and to which the second stator pole teeth (8) are attached.

3. Electrical machine according to Claim 2, **characterized in that**, for connection to the studs (15), the second stator pole teeth (8) have holes (13) parallel to the axis and the studs (15) have holes (16) which are aligned such that they are coincident, through which connecting means (18, 19) are arranged.

4. Electrical machine according to Claim 3, **characterized in that** the holes (16) in the studs (15) are in the form of threaded holes, and the connecting means are in the form of screws (17) manufactured from metal.

5. Electrical machine according to Claim 3, **characterized in that** the connecting means are in the form of rivets manufactured from metal.

6. Electrical machine according to Claim 4 or 5, **characterized in that** electrical isolators (18) are installed between the stator (2) and the base plate (4) on the one hand and between the stator (2) and the connecting means (17) on the other hand.

7. Electrical machine according to Claim 1, **characterized in that** the rotor shaft bearing means (27) are in the form of a tubular component composed of bearing metal, and **in that** this component is arranged such that it is firmly seated in the opening (6) in the stator (2).

8. Electrical machine according to Claim 7, **characterized in that** the base plate (4) has a centring opening (31) which is associated with the rotor shaft bearing means (27), and the rotor shaft bearing means (27) enter the centring opening (31).

## Revendications

1. Moteur électrique, notamment électromoteur, comprenant
- un stator qui présente une pièce centrale formant un moyeu avec une ouverture centrale,
- des premières broches polaires de stator éloignées radialement vers l'extérieur et des deuxièmes broches polaires de stator et
- des bobines d'excitation entourant les premières broches polaires de stator,
- un rotor logé à l'aide d'un arbre de rotor orienté centralement vers le stator et tournant autour du stator,
- une plaque de base et
- des paliers de l'arbre de rotor qui logent l'arbre de rotor en rotation,
**caractérisé en ce qu'**
associés au stator (2), des éléments de support partent de saillies d'une broche polaire de stator (6) sur deux sur la plaque de base, et sont reliés à la deuxième broche polaire de stator (6),
et le moyeu (25) du stator (2) supporte les paliers de l'arbre de rotor (27).

2. Moteur électrique selon la revendication 1,
**caractérisé en ce que**
la plaque de base (4) se compose de tôle et les éléments de support (15) sont des chevilles (15) éloignées de la plaque de base (4, 14), les deuxièmes broches polaires de stator (8) étant fixées sur ces chevilles (15).

3. Moteur électrique selon la revendication 2,
**caractérisé en ce que**
afin d'assurer le raccord aux chevilles (15), les deuxièmes broches polaires de stator (8) présentent des trous (13) parallèles à l'axe, et les chevilles (15) présentent des trous (16) orientés de manière coïncidente, et traversés par les éléments de liaison (18, 19).

4. Moteur électrique selon la revendication 3,
**caractérisé en ce que**
les trous (16) dans les chevilles (15) sont taraudés et les moyens de liaison sont des vis (17) en métal.

5. Moteur électrique selon la revendication 3,
**caractérisé en ce que**
les moyens de liaison sont des rivets en métal.

6. Moteur électrique selon la revendication 4 ou 5,
**caractérisé en ce que**
des isolateurs électriques (18) sont montés entre le stator (2) et la plaque de base (4) d'une part, et entre le stator (2) et les moyens de liaison (17) d'autre part.

7. Moteur électrique selon la revendication 1,
**caractérisé en ce que**
les paliers de l'arbre de rotor (27) sont formés par un composant tubulaire en métal antifriction, fixé dans l'ouverture (6) du stator (2).

8. Moteur électrique selon la revendication 7,
**caractérisé en ce que**
la plaque de base (4) présente une ouverture centrale (31) associée aux paliers de l'arbre de rotor (27), et les paliers de l'arbre de rotor (27) plongent dans l'ouverture centrale (31).
